Europäisches Patentamt

European Patent Office

Office européen des brevets

(19)

(11) Veröffentlichungsnummer: **0 256 335 B1**

# EUROPÄISCHE PATENTSCHRIFT

(45) Veröffentlichungstag der Patentschrift: 27.03.91

(51) Int. Cl.⁵: **G11B 20/22**, G11B 5/03

(21) Anmeldenummer: **87110525.0**

(22) Anmeldetag: **21.07.87**

(54) **Aufzeichnung von Tonsignalen.**

(30) Priorität: **12.08.86 CH 3228/86**

(43) Veröffentlichungstag der Anmeldung:
**24.02.88 Patentblatt 88/08**

(45) Bekanntmachung des Hinweises auf die
Patenterteilung:
**27.03.91 Patentblatt 91/13**

(84) Benannte Vertragsstaaten:
**CH DE FR GB IT LI**

(56) Entgegenhaltungen:
**US-A- 2 727 096**
**US-A- 2 829 209**
**US-A- 2 986 608**
**US-A- 4 451 858**

**PATENT ABSTRACTS OF JAPAN, Band 10,
Nr. 86 (P-443)[2143], 4. April 1986; & JP-A-60
223 006 (SONY K.K.) 07-11-1985**

**Dr.-Ing. Christian Scholz, "Handbuch der Magnetbandspeichertechnik", 1980, Carl Hanser Verlag, München, Wien, Seiten 26, 49**

(73) Patentinhaber: **WILLI STUDER AG Fabrik für
elektronische Apparate
Althardstrasse 30
CH-8105 Regensdorf ZH(CH)**

(72) Erfinder: **Zwicky, Paul
Chännelstrasse 4
CH-8157 Dielsdorf ZH(CH)**

## Beschreibung

Die Erfindung betrifft ein Verfahren und eine Vorrichtung zur Aufzeichnung eines Tonsignales auf einem magnetischen Aufzeichnungstraeger, bei denen ein von dem Tonsignal moduliertes hoeherfrequentes Signal, das die niederfrequente Information des Tonsignales und einen Signalanteil, der im Frequenzspektrum des niederfrequenten Tonsignales liegt, enthaelt, erzeugt wird und nachfolgend ein davon abgeleitetes Hochfrequenzsignal analog aufgezeichnet wird.

Es ist aus der Aufzeichnungstechnik bei Magnetbandgeraeten bekannt, das Tonsignal fuer die Aufzeichnung mit einem hochfrequenten Signal zu ueberlagern. Dabei kann dieses hochfrequente Signal sinusfoermig sein oder aus Rechteckimpulsen bestehen, wie dies aus der US-Patentschrift Nr 4,451,858 bekannt ist. In diesem Falle wird das hochfrequente Signal durch das analoge Tonsignal moduliert und es entsteht ein Signal mit positiven und negativen Impulsen, deren Laenge der positiven oder negativen Auslenkung des analogen Tonsignales entspricht.

Diese bekannte Aufzeichnungstechnik fuehrt aber dazu, dass bei der Aufzeichnung auf zwei nebeneinander angeordneten Spuren fuer zwei verschiedene Aufzeichnungen sogenanntes Uebersprechen zwischen den Spuren stattfindet. Dabei wird das Tonsignal, also das niederfrequente Signal, in mehr oder weniger abgeschwaechter Form auch auf der anderen Spur, wo es unerwuenscht ist, aufgezeichnet. Dies ist umso staerker der Fall, als das Tonsignal mehr Energie enthaelt.

Die Erfindung, wie sie in den Anspruechen gekennzeichnet ist, loest die Aufgabe ein Verfahren und eine Vorrichtung zur Aufzeichnung von Tonsignalen zu schaffen, mit denen das Uebersprechen vermindert werden kann.

Die durch die Erfindung erreichten Vorteile sind im wesentlichen darin zu sehen, dass das Uebersprechen bei der Aufzeichnung um mindestens 30 dB verringert werden kann. Ist auf dem Aufzeichnungstraeger zusaetzlich eine Taktspur vorgesehen, so kann auch das Uebersprechen aus dieser Taktspur um mindestens 30 dB vermindert werden. Es ist ferner bekannt, dass die hoeheren Frequenzen des Tonsignales auch eine zusaetzliche Vormagnetisierung bewirken koennen, wenn sie sich der Frequenz des hochfrequenten Signales naehern. Diese Wirkung wird gemaess der Erfindung verhindert, was die Aussteuerung bei hoeherfrequenten Tonsignalen verbessert.

Im folgenden wird die Erfindung anhand von einen Ausfuehrungsweg darstellenden Zeichnungen naeher erlaeutert. Es zeigt

Figur 1 ein Beispiel eines hochfrequenten Signales,

Figur 2 ein Beispiel eines Teils eines niederfrequenten Tonsignales,

Figur 3 ein Beispiel eines hochfrequenten Signales, das die Information des Tonsignales enthaelt,

Figur 4 ein veraendertes Signal gemaess Figur 3,

Figur 5 ein weiteres Beispiel eines hochfrequenten Signales,

Figur 6 ein Tonsignal gemaess Figur 2,

Figur 7 ein weiteres Beispiel eines Signales gemaess Figur 3,

Figur 8 ein veraendertes Signal gemaess Figur 7,

Figur 9 und 10 je eine schematische Darstellung der erfindungsgemaessen Vorrichtung und

Figur 11 und 12 je eine Darstellung eines Frequenzspektrums der beteiligten Signale.

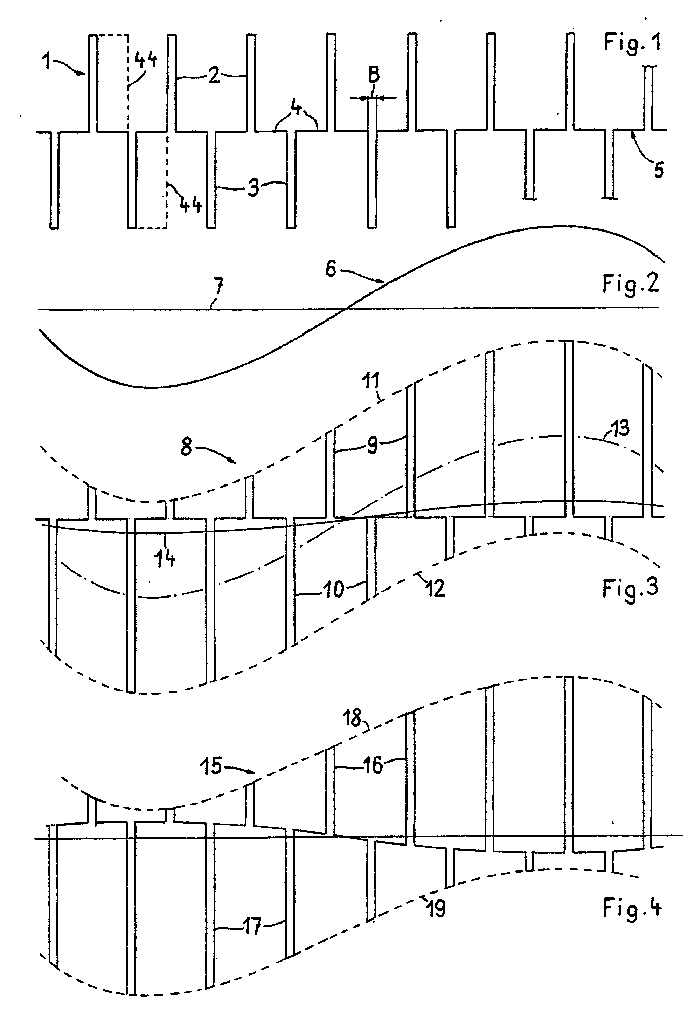

Figur 1 zeigt ein hochfrequentes Signal 1, das aus positiven Impulsen 2 und negativen Impulsen 3 besteht. Die positiven und die negativen Inpulse 2, 3 wechseln sich ab und sind durch Abschnitte 4 ohne Amplitude voneinander getrennt. Die Abschnitte 4 bilden zusammen eine Nulline 5.

Figur 2 zeigt einen Teil eines Tonsignales 6, das gegenueber einer Nullinie 7 positive und negative Auslenkungen aufweist. Das Tonsignal 6 ist ein analoges Signal.

Figur 3 zeigt ein hochfrequentes Signal 8, welches die niederfrequente Information des Tonsignales 6 enthaelt. Das Signal 8 entsteht durch Kombination der Signale 1 und 6. Das Signal 1 wird dabei durch das Tonsignal 6 moduliert. Das hochfrequente Signal 8 weist positive Impulse 9 und negative Impulse 10 auf, die sich abwechseln. Die positiven Impulse 9 und die negativen Impulse 10 folgen Huellkurven 11 und 12, die ein Abbild des Tonsignales 6 sind. Dasselbe gilt fuer eine ebenfalls eingezeichnete Mittellinie 13. Integriert man die Impulse 9 und 10 so erhaelt man eine Kurve 14, welche dem Signal 6 proportional ist. Da das Signal gemaess der Kurve 14 im Vergleich zum Signal 6 abgeschwaecht ist, kann dieses nur noch in geringem Masse auf benachbarte Spuren uebersprechen.

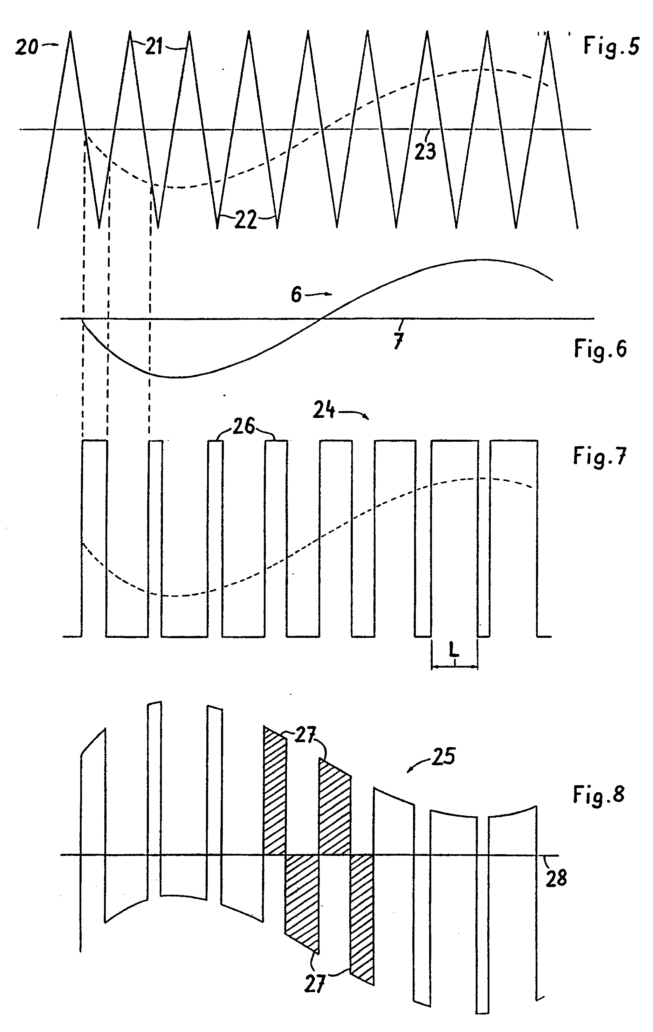

Figur 4 zeigt ein Signal 15, welches die niederfrequente Information des Tonsignales 6 enthaelt, bei dem aber derjenige Signalanteil, der im Frequenzspektrum des niederfrequenten Tonsignales liegt, fehlt. Das Signal 15 ist beispielsweise aus dem hochfrequenten Signal 8 entstanden, indem man denjenigen Signalanteil entfernt hat, der im Frequenzspektrum des niederfrequenten Tonsignales liegt. Der entfernte Signalanteil entspricht dem Signal, das in der Figur 3 durch die Kurve 14 dargestellt ist. Das Signal 15 weist ebenfalls positive Impulse 16 und negative Impulse 17 auf, die einander abwechseln. Die positiven Impulse und die negativen Impuse folgen Huellkurven 18 und 19, die nicht mit den Huellkurven 11 und 12 uebereinstimmen. Alle Huellkurven haben die gleiche Frequenz aber nicht die gleiche Amplitude.

Figur 5 zeigt ein an sich bekanntes hochfrequentes Saegezahnsignal 20 mit positiven Zaehnen 21 und negativen Zaehnen 22 bezogen auf eine Nullinie 23.

Figur 6 zeigt nochmals das Tonsignal 6 mit der Nullinie 7 gemaess Figur 2.

Figur 7 zeigt ein, auf an sich bekannte Weise aus dem Saegezahnsignal 20 und dem Tonsignal 6 gewonnenes hochfrequentes pulsdauermoduliertes Signal 24. Es enthaelt die niederfrequente Information des Tonsignales 6. Diese ist durch die wechselnde Laenge L der positiven Impulse 26 ausgedrueckt.

Figur 8 zeigt ein hochfrequentes Signal 25 das ueber einer Nullinie 28 aufgetragen ist. Es ist von demjenigen Signalanteil des Signales 24 befreit, der im Frequenzspektrum des niederfrequenten Tonsignales 6 liegt. Die Impulse des Signales 25, die ueber einer Nullinie aufgetragen sind, bilden Flaechen 27, die dem Produkt aus der Impulsdauer und der Auslenkung entsprechen. Ueber eine Periode (mit je einem positiven und negativen Impuls) gerechnet, ergibt die Summe dieser Flaechen 27 Null. Da in diesem Signal 25 die Laengen L denjenigen des Signales 24 (Fig. 7) entsprechen, kann diese Bedingung nur erfuellt werden, wenn die Amplitude von Impuls zu Impuls aendert. Die Information des niederfrequenten Tonsignales ist somit durch die Auslenkung der Impulse dargestellt.

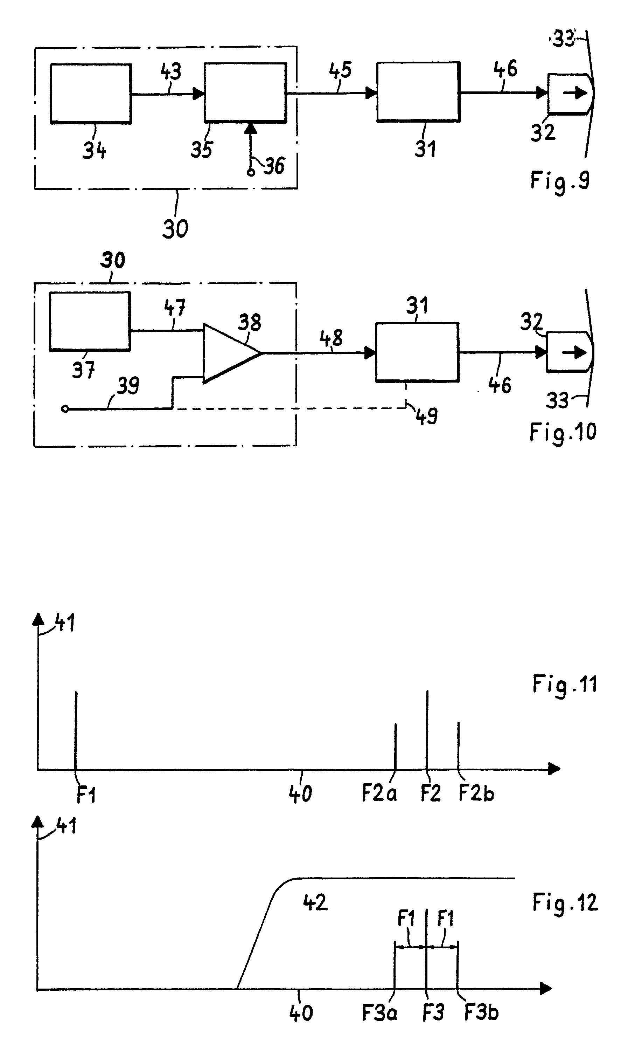

Die Figuren 9 und 10 zeigen je eine schematische Darstellung der erfindungsgemaessen Vorrichtung. Diese besteht aus einer Serieschaltung einer Einheit 30 zur Erzeugung eines hochfrequenten Signales, welches die niederfrequente Information des Tonsignales enthaelt, einer Einheit 31 zum Entfernen desjenigen Signalanteiles, der im Frequenzspektrum des niederfrequenten Tonsignales liegt und einer Einheit 32 zur Aufzeichnung des uebrigbleibenden Signales. Als Einheit 32 wird ein an sich bekannter Aufnahmekopf vorgesehen, der zum Aufzeichnen auf dem betreffenden magnetischen Aufzeichnungstraeger 33 geeignet ist. Die Einheit 30 besteht beispielsweise aus einem Impulsgenerator 34 und einem variablen Amplitudenbegrenzer 35 mit einem Eingang 36 fuer das Tonsignal, oder aus einem Saegezahngenerator 37 und einem Komparator 38 mit einem Eingang 39 fuer das Tonsignal. Die Einheit 31 besteht beispielsweise aus einem Hochpassfilter. Sie kann aber auch als Subtraktionsschaltung ausgebildet sein. Dann weist sie auch einen Eingang 49 fuer das niederfrequente Tonsignal auf, das um einen bestimmten Faktor vermindert, vom Signal in Leitung 48 substrahiert wird. Wird die Einheit 31 als Hochpassfilter ausgebildet, so ist unter Umstaenden wichtig, dass das zur Magnetisierung des Aufzeichnungstraegers beitragende Signal pulstreu resp. phasenlinear ist. Solche Schaltungen sind beispielsweise aus: IEEE Transactions on circuits and systems, Vol.CAS-29, No. 8, August 1982, bekannt.

Die Figuren 11 und 12 zeigen je ein Frequenzspektrum fuer die auftretenden Signale. Laengs einer horizontalen Achse 40 sind Werte fuer Frequenzen aufgetragen. Laengs einer vertikalen Achse 41 sind die Amplituden der Signale aufgetragen. Figur 11 zeigt die Frequenzen die bei der Aufzeichnung eines Tonsignales der Frequenz F1 mit Ueberlagerung mit einem Hochfrequenzsignal der Frequenz F2 gemaess dem Stand der Technik auftreten. Mit F2a und F2b sind Seitenbaender bezeichnet, die durch Addition und Subtraktion der Frequenz F1 von der Frequenz F2 in solchen Faellen entstehen. Das Frequenzspektrum der Signale bei der Aufzeichnung gemaess der Erfindung zeigt Figur 12. Man erkennt dabei die Frequenz F3 des hochfrequenten Signales und Seitenbaender F3a und F3b die in einem Abstand von der Frequenz F3 auftreten, der der Frequenz F1 des Tonsignales entspricht. Mit 42 ist die Charakteristik eines Hochpassfilters angegeben. Die Frequenz F1 fehlt dabei.

Dem erfindungsgemaessen Verfahren liegt die Erkenntnis zugrunde, dass die Magnetisierung eines Aufzeichnungstraegers nur durch die Folge der positiven und negativen Auslenkungen eines Signales beeinflusst wird. Was zwischen den Spitzen der Amplituden des Signales geschieht hat keinen Einfluss auf die Magnetisierung. Es ist auch unwichtig wie lange diese Spitzen der Amplituden aufrechterhalten werden. Es ist deshalb moeglich ein hochfrequentes Signal zu erzeugen, das die niederfrequente Information eines Tonsignales enthaelt ohne niederfrequente Anteile in seinem Frequenzspektrum aufzuweisen. Die niederfrequente Information ist beispielsweise nur in der positiven und negativen Auslenkung der Spitzen der Inpulse enthalten. Die niederfrequenten Anteile des Signales fehlen, wenn dafuer gesorgt wird, dass kein niederfrequenter Strom durch das Signal erzeugt wird. Das bedeutet, dass die aufeinanderfolgenden positiven und negativen Impulse einander jeweils ausgleichen sollen.

Es gibt verschiedene Wege dieses Ziel zu erreichen. Zwei Wege sind anhand der Figuren 1 bis 12 dargestellt.

Ein erster Weg ist anhand der Figuren 1 bis 4 und 9 gezeigt. Dazu stellt der Impulsgenerator 34 beispielsweise ein Signal 1 ueber eine Leitung 43 dem variablen Amplitudenbegrenzer 35 zur Verfuegung. Diese erhaelt ueber den Eingang 36 das analoge Tonsignal 6 und erzeugt ein Signal 8, indem er die Auslenkung der einzelnen Impulse 2, 3 des Signales 1 variiert. Die Spitzen der Impulse 9, 10 des Signales 8 folgen somit den Huellkurven 11 und 12, welche ihrerseits der Auslenkung des Tonsignles 6 folgen. Ist die Breite B der Impulse 2, 3 und dementsprechend auch 9, 10 gering, so enthaelt das Signal 8 nur ein Signal entsprechend der Kurve 14, mit geringer Auslenkung, das durch Intergration der Impulse 9 und 10 entsteht. Integration bedeutet hier Summieren des Produktes aus Auslenkung und Dauer zweier aufeinanderfolgender Impulse die zusammen eine Periode bilden und Verteilen des Produktes ueber die ganze Periode, was eine entsprechend verringerte Auslenkung fuer die Kurve 14 ergibt. Ist die Breite der Impulse 2, 3 und somit auch 9, 10 maximal, was bedeutet dass die Impulse des Signales 1 der Linie 44 entsprechen, so vergroessert sich der durch das Signal entsprechend der Kurve 14 gefuehrte Stromanteil und das Signal entsprechend der Kurve 14 entspricht nun der Mittellinie 13 (Fig. 3). Eine solche Auslegung ist aber unerwuenscht, da sie keine Vorteile gegeneuber dem Stand der Technik bringt. Das Signal 8 wird anschliessend ueber eine Leitung 45 dem Hochpassfilter 31 zugefuehrt, wo es in ein Signal 15 uebergefuehrt wird. Bei diesem Signal werden die positiven Impulse 16, in beliebig gewaehlten Zeitintervallen betrachtet, immer durch die negativen Impulse 17 ausgeglichen. Werden nicht Impulse maximaler Breite B gewaehlt, so bleibt die Information des niederfrequenten Tonsignales durch die Auslenkungen der Spitzen der Impulse 16 und 17, die den Huellkurven 18 und 19 folgen, erhalten. Das Signal 15 wird ueber eine Leitung 46 dem Aufnahmekopf 32 zugefuehrt, welcher den Aufzeichnungstraeger 33 magnetisiert.

Ein zweiter Weg ist anhand der Figuren 5 bis 8 und 10 gezeigt. Der Saegezahngenerator 37 erzeugt ein Signal 20, das ueber eine Leitung 47 einem Komparator 38 zugefuehrt wird. Das Tonsignal 6 liegt am Eingang 39 des Komparators 38 an. Dieser erzeugt in an sich bekannter Weise ein pulsdauermoduliertes Signal 24. Ueber eine Leitung 48 wird das Signal 24 einem Hochpassfilter 31 zugefuehrt, wo der niederfrequente Anteil herausgefiltert wird. So entsteht das Signal 25. Die niederfrequente Information ist auch hier in der Auslenkung der Spitzen der Impulse enthalten.

Das Entfernen desjenigen Signalanteiles, der im Frequenzspektrum des niederfrequenten Tonsignales liegt geschieht in bekannter Weise gemaess einer Filtercharakteristik wie sie aus der Figur 12 ersichtlich ist.

## Ansprüche

1. Verfahren zur Aufzeichnung eines Tonsignales (6) auf einem magnetischen Aufzeichnungstraeger (33), bei dem ein von dem Tonsignal (6) moduliertes hochfrequentes Signal (8, 24, F2), das die niederfrequente Information (F2a, F2b) des Tonsignales (6) und einen Signalanteil (F1), der im Frequenzspektrum des niederfrequenten Tonsignales (6) liegt, enthaelt, erzeugt wird, anschliessend derjenige Signalanteil (F1), der im Frequenzspektrum des niederfrequenten Tonsignales (6) liegt, von dem modulierten Hochfrequenzsignal (F2a, F2, F2b) entfernt wird, und das uebrigbleibende Hochfrequenzsignal (F3, F3a, F3b) analog aufgezeichnet wird.

2. Verfahren gemaess Anspruch 1, dadurch gekennzeichnet, dass das aufgezeichnete hochfrequente Signal (15, 25) aus positiven und negativen Impulsen (16, 17) besteht, die sich abwechseln.

3. Verfahren gemaess Anspruch 1, dadurch gekennzeichnet, dass als hochfrequentes Signal ein pulsdauermoduliertes Signal (24) vorgesehen ist.

4. Verfahren gemaess Anspruch 2, dadurch gekennzeichnet, dass die Impulse (16, 17) eine Amplitude aufweisen, die durch das Tonsignal (6) moduliert ist, so dass die Information in den Amplituden der Impulse (16, 17) enthalten ist und dass die Impulse durch Abschnitte ohne Amplitude voneinander getrennt sind.

5. Verfahren gemaess Anspruch 1, dadurch gekennzeichnet, dass der Signalanteil (F1), der im Frequenzspektrum des niederfrequenten Tonsignales (6) liegt, durch Filterung entfernt wird.

6. Vorrichtung zur Aufzeichnung eines Tonsignales (6) auf einen magnetischen Aufzeichnungstraeger (33) mit einer Serienschaltung einer Einheit (30) zur Erzeugung eines von dem Tonsignal (6) modulierten hochfrequenten Signales (8, 24, F2), das die niederfrequente Information (F2a, F2b) des Tonsignales (6) und einen Signalanteil (F1), der im Frequenzspektrum des niederfrequenten Tonsignales (6) liegt, enthaelt, sowie einer Einheit (32) zur analogen Aufzeichnung des Hochfrequenzsignales (F3, F3a, F3b) auf den magnetischen Aufzeichnungstraeger (33), dadurch gekennzeichnet, dass vor die Einheit (32) zur analogen Aufzeichnung des Hochfrequenzsignales (F3, F3a, F3b) eine Einheit (31) zur Entfernung desjenigen Signalanteiles (F1), des modulierten Hochfrequenzsignales (F2a, F2, F2b), der im Frequenzspektrum des niederfrequenten Tonsignales (6) liegt, geschaltet ist.

7.  Vorrichtung gemaess Anspruch 6, dadurch gekennzeichnet, dass die Einheit (31) zum Entfernen desjenigen Signalanteiles, der im Frequenzspektrum des niederfrequenten Tonsignales liegt, als Hochpassfilter ausgebildet ist.

8.  Vorrichtung gemaess Anspruch 6, dadurch gekennzeichnet, dass die Einheit (31) zum Entfernen desjenigen Signalanteiles, der im Frequenzspektrum des niederfrequenten Tonsignales liegt, als Subtraktionseinheit ausgebildet ist und einen Eingang (49) fuer das Tonsignal oder ein davon abgeleitetes Signal aufweist.

## Claims

1.  A method for recording an audio signal (6) on a magnetic record carrier (33) whereas a high frequency signal (8, 24, F2) is produced which is modulated by the audio signal (6) and which containes the low frequency information (F2a, F2b) pertinent to the audio signal (6) as well as a signal component (F1) which lies in the frequency spectrum of the low frequency audio signal (6), whereas subsequently the signal component (F1) which lies in the frequency spectrum of the low frequency audio signal (6) is removed from the modulated high frequency signal (F2a, F2, F2b) and whereas the remaining high frequency signal (F3, F3a, F3b) is recorded in analoguous manner.

2.  A method according to claim 1, characterised in that the recorded high frequency signal (15, 25) is composed of alternating positive and negative pulses (16, 17).

3.  A method according to claim 1, characterised in that the high frequency signal is a pulse duration modulated signal (24).

4.  A method according to claim 2, characterized in that the pulses (16, 17) have amplitudes modulated by the audio signal (6) causing the information to be contained in the amplitudes of the pulses (16, 17) and in that the pulses are separated by parts with zero amplitude.

5.  A method according to claim 1, characterized in that the signal component (F1) which lies in the frequency spectrum of the low frequency audio signal (6) is removed by filtering.

6.  An apparatus for recording an audio signal (6) on a magnetic record carrier (33) comprising a series connection of a unit (30) for producing a high frequency signal (8, 24, F2) modulated by the audio signal (6) and containing the low frequency information (F2a, F2b) of the audio signal as well as a signal component (F1) which lies in the frequency spectrum of the low frequency audio signal (6) and of a unit (32) for analogue recording of the high frequency signal (F3, F3a, F3b) on the magnetic record carrier (33), characterized in that the unit (32) for analogue recording of the high frequency signal (F3, F3a, F3b) is preceded by a unit (31) for removing the signal component (F1) which lies in the frequency spectrum of the low frequency audio signal (6) from the modulated high frequency signal (F2a, F2, F2b).

7.  An apparatus according to claim 6, characterized in that the unit (31) which is designed for removing the signal component which lies in the frequency spectrum of the low frequency audio signal, is constituted by a high pass filter.

8.  An apparatus according to claim 6, characterized in that the unit (31) which is designed for removing the signal component which lies in the frequency spectrum of the low frequency audio signal, is constituted by a subtraction unit with an input (49) for the audio signal or a signal derived therefrom.

## Revendications

1.  Méthode d'enregistrement d'un signal audio (6) sur un support (33) magnétique où un signal à haute fréquence (8, 24, F2) est produit qui est modulé par le signal audio (6) et qui contient l'information à basse fréquence (F2a, F2b) propre au signal audio ainsi qu'une composante (F1) située dans le spectre acoustique du signal audio à basse fréquence, où la composante (F1) qui est située dans le spectre acoustique du signal audio à basse fréquence est retirée du signal à haute fréquence (F2a, F2, F2b) modulé et où le reste du signal à haute fréquence (F3, F3a, F3b) est enregistré de manière analogique.

2.  Méthode selon la revendication 1, caractérisée en ce que le signal à haute fréquence (15, 25) enregistré est composé d'impulsions positives et négatives (16, 17) qui alternent.

3.  Méthode selon la revendication 1, caractérisée en ce qu'un signal (24) à durée d'impulsion modulée est prévu comme signal à haute fréquence.

4. Méthode selon la revendication 2, caractérsée en ce que les impulsions (16, 17) ont une amplitude modulée par le signal audio (6) afin que l'information est contenue dans les amplitudes des impulsions (16, 17) et que les impulsions sont séparées par des parties sans amplitude.

5. Méthode selon la revendication 1, caractérisée en ce que la composante (F1) située dans le spectre acoustique du signal audio (6) à basse fréquence est retirée par filtration.

6. Appareil pour enregistrer un signal audio (6) sur un support (33) magnétique composé d'une unité (30) destinée à produire un signal à haute fréquence (8, 24, F2) modulé par le signal audio (6) qui contient l'information (F2a, F2b) à basse fréquence propre au signal audio (6) et une composante (F1) située dans le spectre acoustique du signal audio (6) à basse fréquence, d'une unité (32) destinée à enregistrer le signal à haute fréquence (F3, F3a, F3b) sur le support (33) magnétique, toutes connectées en série, caractérisé en ce qu'une unité (31) destinée à retirer la composante (F1) située dans le spectre acoustique du signal audio à basse fréquence du signal à haute fréquence (F2a, F2, F2b) modulé, est placé avant l'unité (32) destinée à enregistrer le signal à haute fréquence (F3, F3a, F3b) de manière analogique.

7. Appareil selon la revendication 6, caractérisé en ce que l'unité (31) destinée à retirer la composante située dans le spectre acoustique du signal audio à basse fréquence est constituée par un filtre à caractéristique passe-haut.

8. Appareil selon la revendication 6, caractérisé en ce que l'unité (31) destinée à retirer la composante située dans le spectre acoustique du signal audio à basse fréquence est constituée par une unité à soustraction qui a une entrée

Fig. 1

Fig. 2

Fig. 3

Fig. 4

Fig.5

Fig.6

Fig.7

Fig.8

8

Fig.9

Fig.10

Fig.11

Fig.12